Europäisches Patentamt

European Patent Office

Office européen des brevets

(19)

(11) **EP 1 453 264 A1**

(12) **EUROPEAN PATENT APPLICATION**
published in accordance with Art. 158(3) EPC

(43) Date of publication:
**01.09.2004 Bulletin 2004/36**

(51) Int Cl.⁷: **H04L 27/00**

(21) Application number: **03809837.2**

(86) International application number:
**PCT/JP2003/007964**

(22) Date of filing: **24.06.2003**

(87) International publication number:
**WO 2004/040871 (13.05.2004 Gazette 2004/20)**

(84) Designated Contracting States:
**AT BE BG CH CY CZ DE DK EE ES FI FR GB GR HU IE IT LI LU MC NL PT RO SE SI SK TR**

(30) Priority: **31.10.2002 JP 2002317489**

(71) Applicant: **MITSUBISHI DENKI KABUSHIKI KAISHA**
**Tokyo 100-8310 (JP)**

(72) Inventors:
• **YAMAZAKI, Takuya, Mitsubishi Denki K. K.**
**Tokyo 100-8310 (JP)**
• **HUJIHARA, Nobuo, Mitsubishi Denki K. K.**
**Tokyo 100-8310 (JP)**

(74) Representative: **Pfenning, Meinig & Partner GbR**
**Mozartstrasse 17**
**80336 München (DE)**

(54) **MODULATION DEVICE, DEMODULATION DEVICE, MODULATION/DEMODULATION SYSTEM, MODULATION METHOD, DEMODULATION METHOD, MODULATION PROGRAM, COMPUTER-READABLE RECORDING MEDIUM CONTAINING THE MODULATION PROGRAM, DEMODULATION PROGRAM, AND COMPUTER-READABLE RECORDING MEDIUM CONTAINING THE DEMODULATION PROGRAM**

(57) When a coding processing unit 12 of a multi-level modulation apparatus 1 maps REPETITION bits to transmission data, it is possible to allocate symbols including the REPETITION bits at signal points of four corners of a signal constellation by mapping the REPETITION bits to specific bit locations of the symbols as a result of segmenting the transmission data after mapping into plural symbols, and thus an error rate can be reduced.

Fig. 1

SIGNAL POINT OF SYMBOL

## Description

Technical Field

The present invention relates to a mapping method for mapping dummy bits to transmission data.

Background Art

According to 3GPP (3rd Generation Partnership Project) RELEASE 5, in an HS-DSCH (High Speed - Downlink Shared Channel) transmitting process during downlink communication (transmission from BTS (base station) to MS (mobile station)) of HS-DPA (High Speed - Downlink Packet Access), a REPETITION bit is generated by carrying out a data repeating process called REPETITION in order to match the data size of a frame in RATE-MACHING process. REPETITION bits are placed at random in a symbol (signal) through a process such as interleaving and transmitted using a multi-level modulation method (3GPP TR25.858 V5.0.0 (2002-03), Internet (URL:http://www.3gpp.org)).

Since a conventional coding method places REPETITION bits at random, an error rate of the transmission data is not always reduced.

The present invention aims to reduce the error rate of the symbol to which REPETITION bits are mapped.

It is another object to reduce the error rate of the transmission in the multi-level modulation method by a coding process such as mapping REPETITION bits to predetermined locations in one symbol. Further, it is still another object to reduce the error rate of the transmission by converting a specific REPETITION bit.

Disclosure of the Invention

According to the present invention, a modulation apparatus for modulating transmission data may include:

a transmission data generating unit for generating the transmission data; and
a coding processing unit for comparing a bit number of the transmission data generated by the transmission data generating unit and a bit number of data area of a transmission frame for transmitting the transmission data, mapping dummy bits to predetermined locations, for the number of bits by which the bit number of transmission data does not achieve the bit number of the data area of the transmission frame, segmenting the transmission data after mapping into a plurality of symbols, each having a prescribed number of bits, and as a result coding the transmission data by mapping the dummy bits to specific bit locations of at least one of the plurality of symbols.

Brief Explanation of the Drawings

Fig. 1 shows a signal constellation of symbols in 16 QAM.
Fig. 2 shows a signal constellation of symbols in 64 QAM.
Fig. 3 shows a configuration of a multi-level modulation apparatus 1.
Fig. 4 shows a configuration of a multi-level demodulation apparatus 2.
Fig. 5 is a flow diagram showing processes from generating data consisting of plural symbols to transmitting the data.
Fig. 6 is a flow diagram showing processes of the multi-level demodulation apparatus 2 which receives and processes data transmitted by a multi-level modulation apparatus 11.
Fig. 7 is a flow diagram showing processes of a coding processing unit.
Fig. 8 shows a mapping process in case of 16 QAM.
Fig. 9 shows mapping of REPETITION bits to a data bit stream after interleaving process.
Fig. 10 shows a mapping process in case of 64 QAM.
Fig. 11 shows mapping of REPETITION bits to a data bit stream after interleaving process.
Fig. 12 shows a process configuration for allocating REPETITION bits to spread over plural symbols in cases of 16 QAM and 64 QAM.
Fig. 13 is a flow diagram of a coding processing unit.
Fig. 14 shows a signal constellation of data symbols after replacing REPETITION bits in case of 16 QAM.
Fig. 15 is a flow diagram showing processes from generating plural symbols to transmitting data.
Fig. 16 is a flow diagram showing processes for receiving and processing data transmitted by the multi-level modulation apparatus 1.
Fig. 17 shows a signal constellation of symbols in case of 64 QAM.
Fig. 18 is a flow diagram showing processes from generating plural symbols to transmitting data.
Fig. 19 shows a basic configuration of a computer for the multi-level modulation apparatus 1 and the multi-level demodulation apparatus 2.

Preferred Embodiments for Carrying out the Invention

In the following invention according to an embodiment, a REPETITION bit transmitting method in a multi-level modulation method of greater than 4 levels will be described.

Embodiment 1.

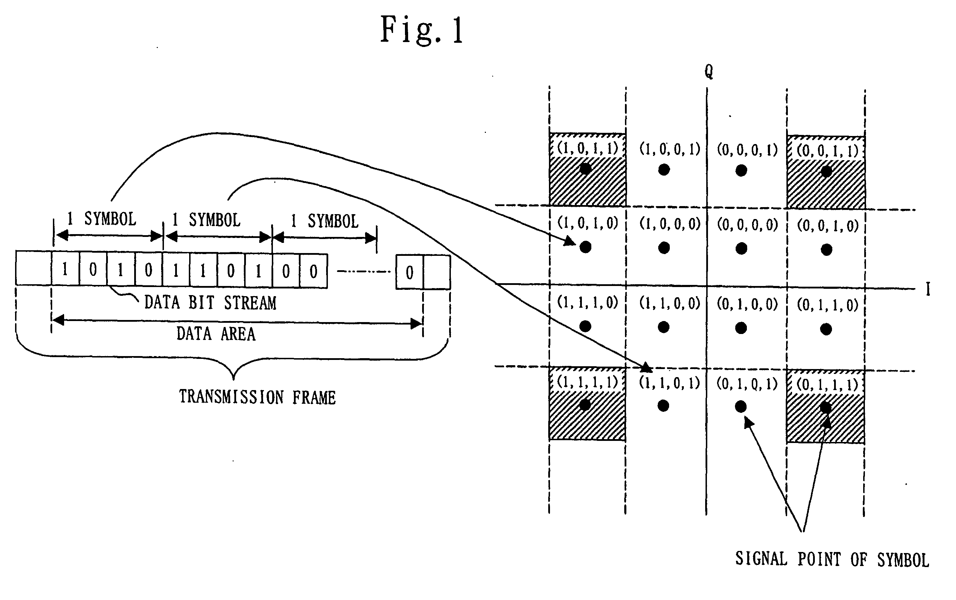

In Fig. 1, the drawing of the left-hand side shows a data area within a transmission frame as a data bit stream. In case of 16 QAM (Quadrature Amplitude Modulation: 16-level quadrature amplitude modulation), transmission data transmitted by the data area within the transmission frame is a collection of symbols having N bits (N = 4). To each bit of the lowest M bits (M = N - 2 = 2) of at least one of the symbols in the transmission data, a REPETITION bit having a value of 1 is mapped. Here, a REPETITION bit is an example of a dummy bit that will be inserted in the transmission data in order to match the size of the transmission data with the size of data area in the transmission frame.

The drawing of the right-hand side in Fig. 1 shows a signal constellation of symbols in 16 QAM. There are 16 signal points of the symbols in the signal constellation, and generally in case of QAM, two adjacent symbols include only one different bit within one symbol (four bits) of data, so that a 1-bit error might cause a minimum error to the symbols. For example, four points surrounding a signal point (1, 0, 0, 0) of 16 QAM are (1, 0, 1, 0), (1, 1, 0, 0), (0, 0, 0, 0), and (1, 0, 0, 1), which are different from the signal point (1, 0, 0, 0) respectively at the third bit, the second bit, the first bit, and the fourth bit. In this way, in the signal constellation, plural signals are allocated two-dimensionally based on a rule that two adjacent symbols include one different bit.

Signal constellations as shown in Figs. 1, 2, and 17 are used in 3 GPP, HSDPA. However, if 3 GPP, HSDPA is not applied, the symbol allocation is not limited to the signal constellation shown in Fig. 1, etc. as long as the allocation satisfies the above condition that two adjacent symbols include one different bit.

As shown in Fig. 1, each symbol in the right-hand side is placed at a signal point having the same value with the value of the signal constellation in the left-hand side. Thus, as discussed above, by mapping the REPETITION bit having a value of 1 to each bit in the lowest M bits (M = 2) of at least one symbol within the transmission data, the lowest two bits of the signal points at four corners on the signal constellation of symbols are filled by "1," so that the symbols having the REPETITION bits at the lowest two bits are placed at the signal points in the four comers of the signal constellation.

In this way, this embodiment enables to reduce an error rate in the transmission using the multi-level modulation method by replacing the REPETITION bits with "1" and allocating them to the lowest 2 bits of one symbol.

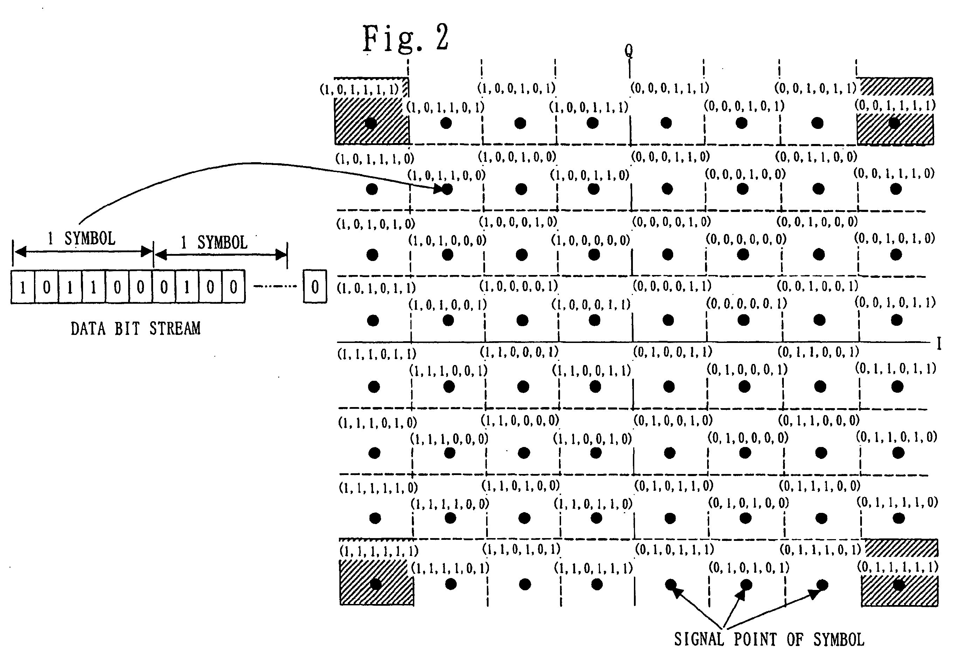

Fig. 2 shows a data bit stream and a signal constellation of symbols, in which each symbol has six bits in case of 64 QAM. The relationship between the right-hand side drawing and the left-hand side drawing is the same as the one in Fig. 1.

The data bit streams shown in Figs. 2, 9, 11, 14, and 17 all represent data areas within the transmission frames.

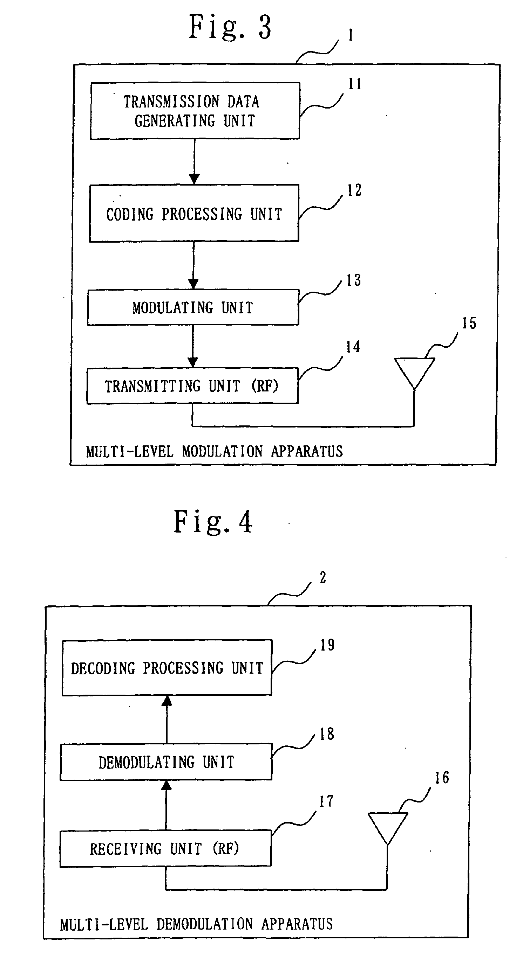

Next, Figs. 3 and 4 show configurations of the multi-level modulation apparatus 1 and the multi-level demodulation apparatus 2 according to this embodiment.

The multi-level modulation apparatus 1 carries out multi-level modulation and transmits data consisting of plural symbols. The multi-level demodulation apparatus 2 receives the data consisting of plural symbols and carries out multi-level demodulation.

The multi-level modulation apparatus 1 includes a transmission data generating unit 11, a coding processing unit 12 which performs channel coding on the transmission data generated by the transmission data generating unit 11 and maps REPETITION bits generated by RATE-MATCHING, a modulating unit 13 which modulates data, and a transmitting unit (RF) 14 which transmits by radio the data modulated by the modulating unit 13 via an antenna 15.

On the other hand, the multi-level demodulation apparatus 2 includes receiving unit (RF) 17 which receives the modulated data using an antenna 16, a demodulating unit 18 which demodulates the data received by the receiving unit 17, and a decoding processing unit 19 which removes the REPETITION bits from the data demodulated by the demodulating unit 18 and decodes the data.

First, the operation of the multi-level modulation apparatus 1 will be explained. Here, a case of 16 QAM will be discussed as an example.

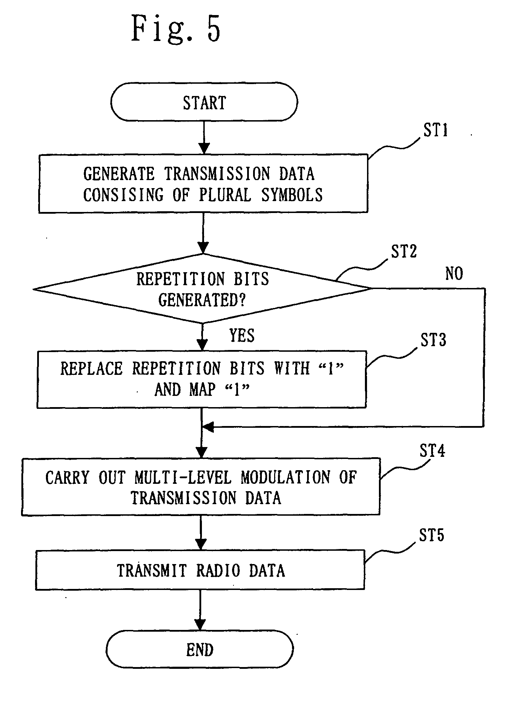

Fig. 5 is a flow diagram showing the operation of the multi-level modulation apparatus 1 from generating the transmission data consisting of plural symbols to transmitting the data.

First, the transmission data generating unit 11 of the multi-level modulation apparatus 1 generates transmission data that is a data bit stream consisting of plural symbols (step ST1).

The coding processing unit 12 performs coding and when the REPETITION bit is generated, replaces the REPETITION bit with "1" and maps "1" to a predetermined location of the symbol (steps ST2, ST3). Here, the REPETITION bit can be generated to have a value of "1." In such a case, the operation of replacing the REPETITION bit with "1" becomes unnecessary.

One example of mapping at the predetermined location of the symbol is mapping REPETITION bits having a value of 1 to the lowest 2 bits of the symbol.

As explained above, the coding processing unit 12 compares the number of bits of the transmission data generated by the transmission data generating unit 11 and the number of bits of the data area in the transmission frame with which the data is transmitted. REPETITION bits are mapped at the predetermined locations, for the number of bits by which the bit number of the transmission data does not achieve the bit number of the data area of the transmission frame, and the transmission data after mapping is segmented into plural symbols, each of which consisting of a prescribed number of bits. Consequently, the transmission data is coded by mapping the REPETITION bits to the predetermined bit locations of at least one of symbols. Then, the symbol to which the REPETITION bits are mapped is allocated at each of four corners, which are the outermost of the signal constellation in the IQ coordinates system, and the symbols can be transmitted.

The signal constellation of symbols in the IQ coordinates system has a feature that the outer signal point which the symbol including the REPETITION bits is allocated to, the less the error rate of the transmission data becomes. Therefore, it is possible to minimize the error rate by allocating the symbol including the REPETITION bits to the outermost four corners of the signal constellation.

Next, the modulating unit 13 carries out multi-level modulation on the data bit stream to which mapping is performed by the coding processing unit 12 as shown in Fig. 5 (step ST4).

The transmitting unit 14 transmits by radio the transmission data modulated by the modulating unit 13 via the antenna 15 (step ST5).

In the following, the operation of the coding processing unit 12, which is shown by ST 2 and ST3 in Fig. 5, will be explained in detail.

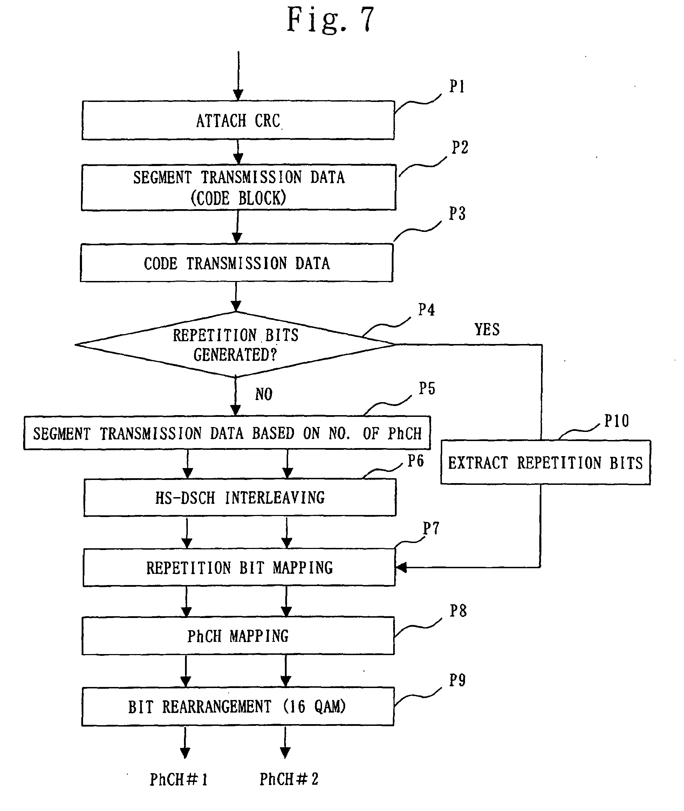

Fig. 7 shows a concrete operation of the coding processing unit 12. At P1, reliability information is attached to the transmission data. One example of the reliability information is CRC (Cyclic Redundancy Check).

At P2, the transmission data (CODE BLOCK) is segmented based on the size of the data area in the transmission frame. That is, the transmission data is segmented into plural symbols (signals).

At P3, the segmented transmission data is coded.

At P4, RATE-MATCHING process is performed and the REPETITION bit is generated.

In case the REPETITION bit is generated, the generated REPETITION bit is extracted according to the embodiment of the present invention (P10).

When the REPETITION bit is not generated, the transmission data segmentation (P5) is performed on the data except for the REPETITION bit according to the number of PHCH (PHysical CHannel), and at P6, HS-DSCH interleaving process is performed so as to deal with a burst error during the transmission.

After P6 process is finished, the REPETITION bit is converted to "1" and the REPETITION bit is mapped sequentially from the final symbol of the transmission data by the bit number of the REPETITION bits (P7).

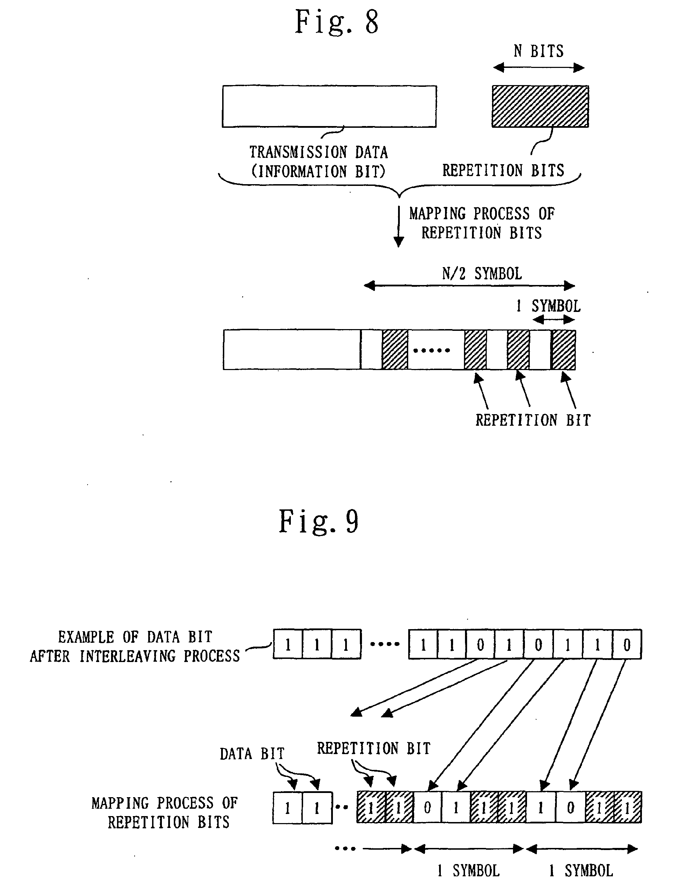

The mapping of the REPETITION bits is performed by mapping the number N of bits REPETITIONed in the number of symbols = N/2 (N+1 in case of N%2>0) as shown in Fig. 8.

In case of N%2>0, the mapping is performed in the way that the redundant bit is placed from the right side of one symbol and also from the final symbol. Fig.

9 shows that the REPETITION bits are mapped to the bit sequence of the interleaved transmission data. In Figs. 8 and 9, the REPETITION bits are mapped in N/2 symbol, which shows one of examples of mapping the REPETITION bits. The REPETITION bits can be mapped to predetermined locations of the transmission data (information bit).

After the mapping process of Physical CHannel (P8), bit-rearrangement (BIT-REARRANGEMENT FOR 16QAM) is performed (P9), and the data is transmitted to the modulating unit 13.

Next, the operation of the multi-level demodulation apparatus 2 will be discussed in case of 16QAM as an example.

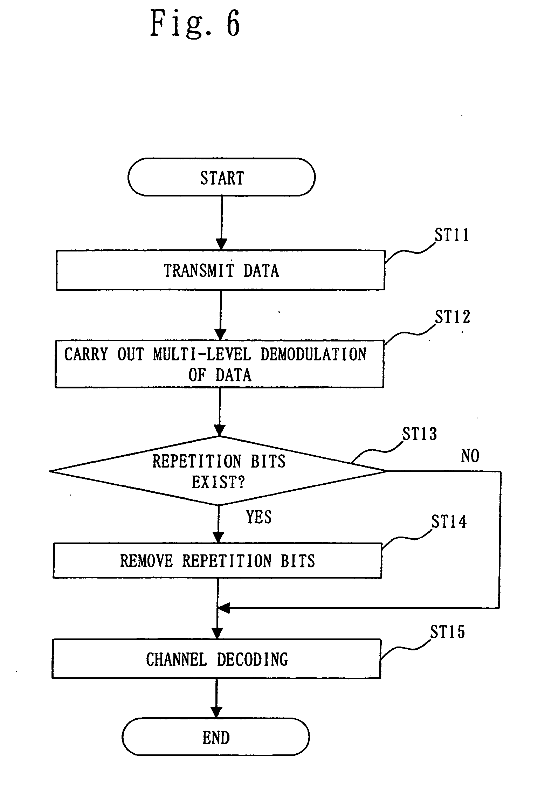

Fig. 6 is a flow diagram showing processes of the multi-level demodulation apparatus 2 which receives and processes data transmitted from the multi-level modulation apparatus 1.

When the multi-level modulation apparatus 1 transmits data, the receiving unit 17 of the multi-level demodulation apparatus 2 receives the data (step ST11). When the receiving unit 17 receives the data, the demodulating unit 18 demodulates the data (step ST12).

At step ST11, the receiving unit 17 receives the transmission data to which the REPETITION bits have been mapped at the predetermined locations based on the predefined mapping condition.

When the demodulating unit 18 demodulates the received data, the decoding processing unit 19 removes the REPETITION bits from the demodulated data and decodes the data (steps ST13, ST14, and ST15). To which symbol the REPETITION bits are mapped is computed using information which is previously notified. Concretely, at step ST13, the decoding processing unit 19 computes the locations of the REPETITION bits in the transmission data from the predefined mapping condition, the bit number of the REPETITION bits which have been mapped to the transmission data, and the bit number of the whole transmission data, and determines whether or not the REPETITION bits exit from the computed result. Based on the computed locations of the REPETITION bits, the REPETITION bits are removed from the transmission data demodulated by the demodulating unit.

Hereinbefore, the modulation system has been explained, in which the signal point, at which the error rate can be reduced, is selected by mapping REPETITION bits, which are generated in order to match the bit number of data of the radio frame, to the predetermined locations of the symbol and transmitting in the multi-level, greater than 4 levels, modulation system.

Further, the modulation system has been explained, in which the signal point, at which the error rate can be reduced, is selected by replacing REPETITION bits, which are generated in order to match the bit number of the radio frame, with "1" and mapping REPETITION bits to the lowest two bits of one symbol in 16 QAM.

Further, the modulation system has been explained, in which REPETITION bits are mapped from the final data, for a number of symbols to which REPETITION bits can be mapped.

According to the first embodiment, the symbols to which mapping have been performed by the mapping of REPETITION bits can be allocated to four corners of the signal constellation in the IQ coordinate system and can be transmitted. Accordingly, the error rate of the transmission data can be reduced.

Embodiment 2.

In the first embodiment, the mapping system in case of 16 QAM, in which one symbol has four bits, has been discussed. In this embodiment, a case of 64 QAM, in which one symbol has six bits, will be described.

The operation of the coding processing unit 12 in case of 64 QAM transmission will be explained. The operation of the coding processing unit 12 in case of 64 QAM transmission is basically the same as the one of the coding processing unit 12 in case of 64 QAM transmission as shown in Fig. 6.

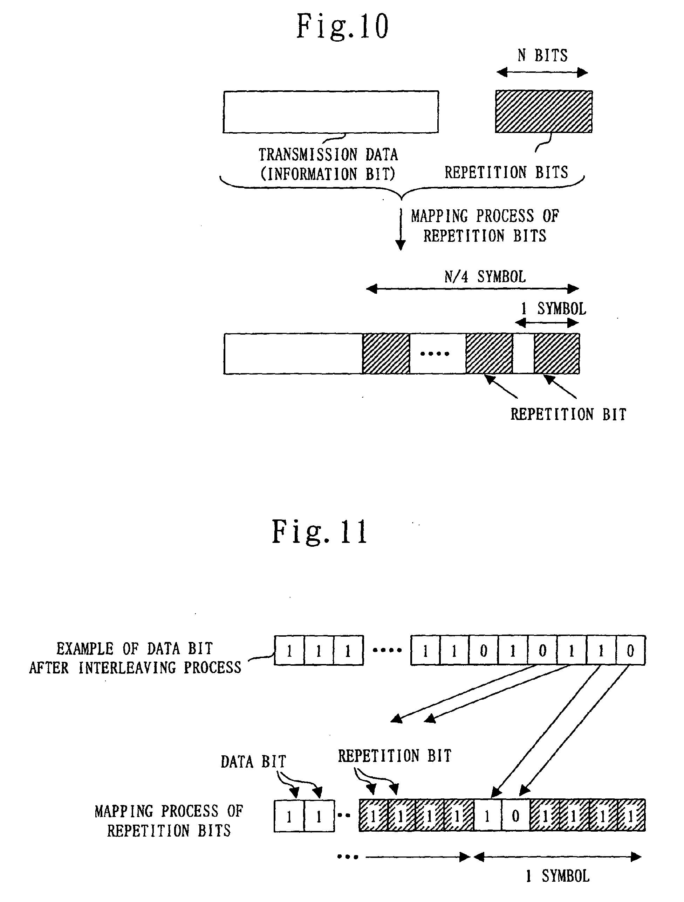

As shown in Fig. 7, first, at P1, the reliability information is attached, and at P2, the data segmentation is done based on the size of the transmission data (information bit). At P3, the transmission data is coded. At P4, RATE-MATCHING is performed and the REPETITION bit is generated. Here, the generated REPETITION bit is extracted (P10). Through the segmentation process of the transmission data based on the number of PhCH (P5), the interleaving process is carried out for dealing with the burst error in the transmission at P6. After the process at P6 is finished, the REPETITIONed bit is replaced with "1," and mapping is done from the final symbol of the data by the number of symbols which can be mapped (P7). The later processes (P8, P9) are the same as ones in the case of 16 QAM. The mapping is performed by mapping the number N of REPETITIONed bits in the number of symbols = N/4 (N+1 in case of N%4>0). Fig. 10 shows the mapping process in case of 64 QAM. Fig. 11 shows that the REPETITION bits are mapped to the data bit stream after the interleaving process. In case of N%4>0, the mapping is done in the way that the redundant bit is placed sequentially from the right digit of one symbol. The mapping processes shown in Figs. 10 and 11 are basically the same as ones shown in Figs. 8 and 9.

Hereinbefore, the modulation system has been explained, in which the signal point at which the error rate can be reduced is selected by replacing the REPETITION bits, generated in order to match the bit number of the radio frame, with "1" and mapping the REPETITION bits to the lowest four bits of one symbol in 64 QAM.

By replacing the REPETITION bits with "1" for the number of symbols to which the REPETITION bits are mapped from the final symbol of the data and mapping to the lowest four bits of the symbol, the mapped symbols can be allocated at the four corners of the signal constellation and can be transmitted. Accordingly, the error rate can be reduced.

Embodiment 3.

In the first and the second embodiments, the mapping methods for mapping from the final symbol by the number of symbols to which mapping can be done, have been described. In the present embodiment, a multi-level modulation system for uniformly distributing and mapping REPETITION bits to the whole data will be explained.

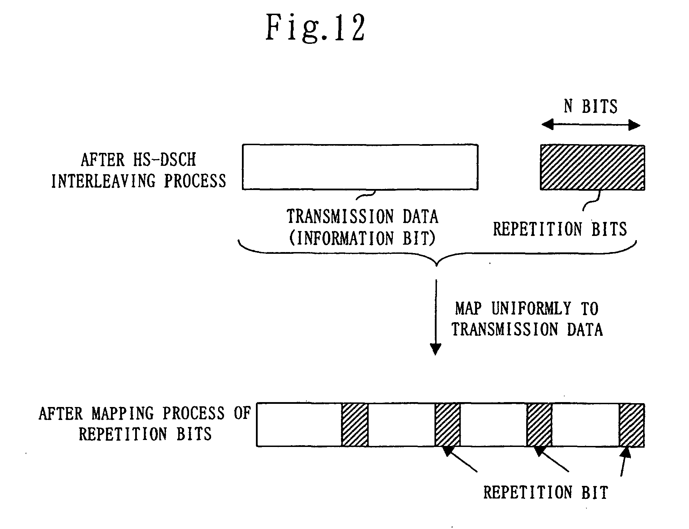

Fig. 12 shows a configuration of the process for distributing and allocating REPETITION bits to plural symbols in both cases of 16 QAM and 64 QAM.

In case of 16 QAM, the mapping is performed at every M1 data symbol from the initial symbol. Here, M is obtained by the following equation:

$$M1 = (S + (N/4)) / (N/2)$$

where N: the number of the REPETITION bits, and S: the number of symbols of the whole transmission data.

Similarly, in case of 64 QAM, the mapping is performed at M2 data symbol from the initial symbol. M2 is obtained by the following equation:

$$M2 = (S + (N/6) / (N/4)$$

where N: the number of the REPETITION bits, and S: the number of symbols of the whole transmission data.

Hereinbefore, the modulation system has been described, in which the mapping process of the REPETITION bits is performed by distributing as uniformly as possible on the whole data.

Embodiment 4.

In this embodiment, another case will be explained, in which a REPETITION bit generated in the RATE-MATCHING process is "0," and the REPETITION bit is changed to "1" when the REPETITION bit is allocated to at least one bit of the lowest two bits in one symbol, in case of 16 QAM where one symbol includes four bits.

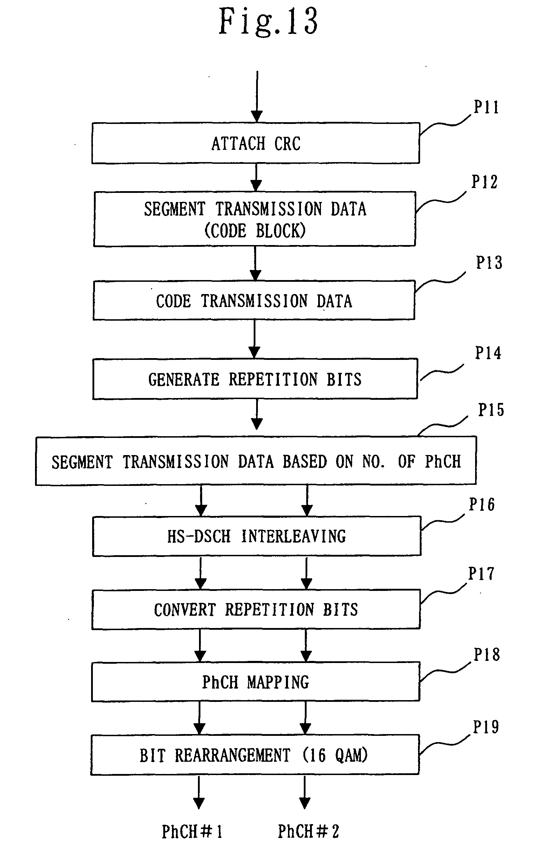

The operation of the transmission in case of 16 QAM according to the present embodiment will be discussed. Fig. 13 is a flow diagram showing the operation of the coding processing unit 12.

At P11, the reliability information is attached to the transmission data. At P12, the data is segmented based on the size of the transmission data (information data). At P13, the transmission data is coded. At P14, the RATE-MATCHING process is performed and a REPETITION bit is generated. The data is segmented based on the number of PHCH (P15), and at P16, HS-DSCH interleaving process is performed to deal with a burst error during the transmission. After the process at P16 is finished, when condition that a REPETITION bit is "0" and also among the REPETITIONed bits at least one bit of the lowest two bits is the REPETITION bit in one symbol is satisfied, the REPETITION bit is converted to "1" (P17). After PHYSICAL CHANNEL mapping is finished (P18), BIT-REARRANGEMENT FOR 16 QAM is performed (P19), and the data is transmitted to the modulating unit 13.

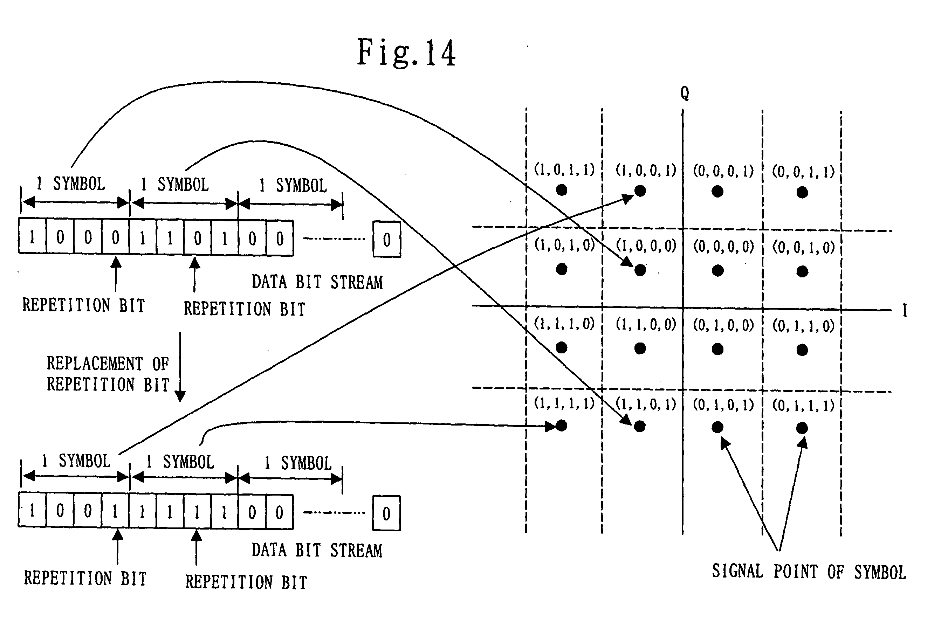

Fig. 14 shows a signal constellation status of symbols in case of the data symbol of 16 QAM after replacing the REPETITION bit by the above process.

As shown in Fig. 14, when the REPETITION bit generated by the RATE-MATCHING process "0," and at least one bit of the lowest two bits of the signal constellation is the REPETITION bit, the REPETITION bit is replaced with "1" in this embodiment. When the above condition is not satisfied, the REPETITION bit generated by the RATE-MATCHING is transmitted without conversion.

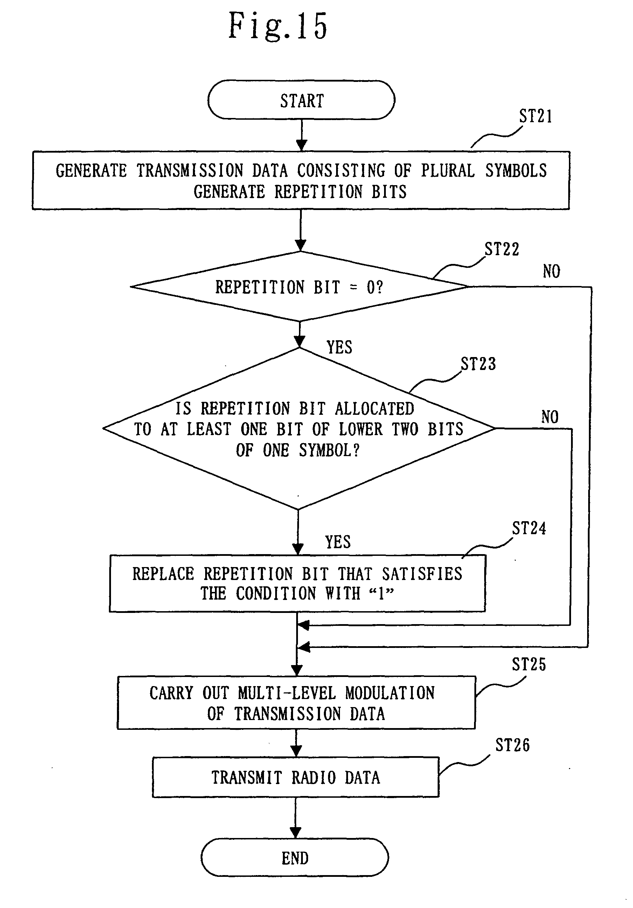

Fig. 15 shows an operational flow diagram of the multi-level modulation apparatus 1 from generating the transmission data consisting of plural symbols to transmitting the data.

First, the transmission data generating unit 11 of the multi-level modulation apparatus 1 generates transmission data (data bit stream) consisting of plural symbols (step ST21).

The coding processing unit 12 generates the REPETITION bit by the coding process and the RATE-MATCHING process (step ST21). When the generated REPETITION bit is "0" and the REPETITION bit is allocated to at least one bit of the lowest two bits in the symbol, the REPETITION bit is replaced with "1" (steps ST22, ST23, and ST24).

As shown in Fig. 12, since the REPETITION bit generated by the coding processing unit 12 is replaced with "1" and transmitted, it becomes possible to transmit the data with allocating the symbols to the outside in the signal constellation in the IQ coordinates system. Consequently, the error rate can be reduced.

After the process of the coding processing unit 12 is finished, the modulating unit 13 carries out multi-level modulation of the data after mapping (step ST25).

The transmitting unit 14 transmits by radio the transmission data modulated by the modulating unit 13 via the antenna 15 (step ST26).

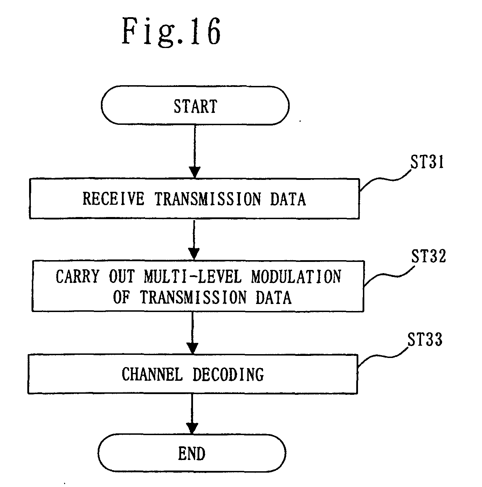

On the other hand, Fig. 16 shows a flow diagram in which the multi-level demodulation apparatus 2 receives and processes the transmission data transmitted from the multi-level modulation apparatus 1.

When the multi-level modulation apparatus 1 transmits the transmission data, the receiving unit 17 of the multi-level demodulation apparatus 2 receives the transmission data (step ST31).

When the receiving unit 17 receives the data, the demodulating unit 18 carries out multi-level demodulation of the transmission data (step ST32). When the demodulating unit 18 carries out the demodulation of the received data, the decoding processing unit 19 decodes the demodulated data (step ST33).

Hereinbefore, the modulation system has been explained, in which the REPETITION bit, generated in order to match the number of bits of the radio frame, is converted from '0' to '1,' which enables to select signal points for transmission so as to reduce the error rate in the multi-level modulation system.

Further, the modulation system has been explained, in which in case of 16 QAM, when the condition that the REPETITION bit generated in order to match the number of bits of the radio frame is 0 and that the REPETITION bit is allocated to at least one bit of the lowest two bits of one symbol are satisfied, the REPETITION bit is converted to '1' from '0'.

By the processes in the fourth embodiment, the signal points are placed outside of the signal constellation, which enables to reduce the error rate in the transmission according to the multi-level modulation system. Namely, since the symbol of which the REPETITION bits satisfy the above condition can be placed outside in the IQ coordinate system and transmitted, the error rate of the transmission data can be reduced.

Embodiment 5.

The transmitting operation in case of 64 QAM according to the present embodiment will be discussed. The basic operation of the coding processing unit 12 in case of 64 QAM is the same as one of the coding processing unit 12 in case of 16 QAM and can be shown by the flow diagram of Fig. 13.

At P11, the reliability information is attached to the transmission data. At P12, the data is segmented based on the size of the transmission data (information data). At P13, the transmission data is coded. At P14, the RATE-MATCHING process is performed and a REPETITION bit is generated. The data segmentation process is performed based on the number of PHCH (P15), and at P16, HS-DSCH interleaving process is performed to deal with a burst error in the transmission. After the process at P16, if the condition that the REPETITION bit is '0' and also at least one bit of the midmost two bits of one symbol is the REPETITION bit is satisfied, the REPETITION bit is converted by "1" (P17). After performing PHYSICAL CHANNEL mapping process (P18), bit arrangement (BIT-REARRANGEMENT FOR 64 QAM) is performed and the data is transmitted to the modulating unit 13.

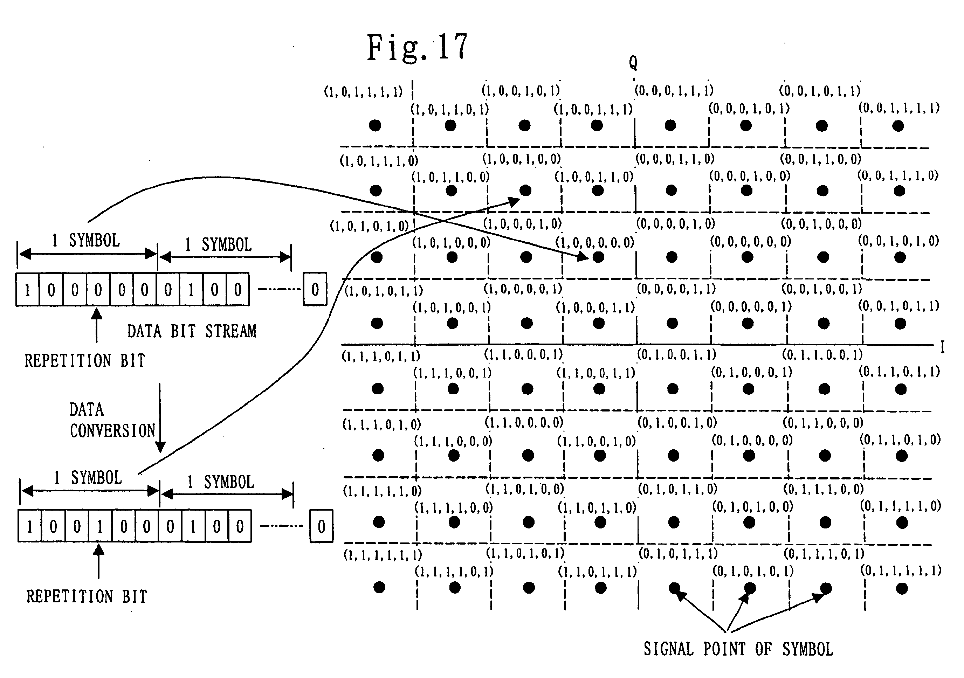

In case of the symbol of 64 QAM, the signal constellation will be like Fig. 17. As shown in Fig. 17, when the REPETITION bit generated by the RATE-MATCHING process is '0' and also the lowest two bits of the signal constellation include at least one the REPETITION bit, this embodiment replaces the REPETITION bit with "1." By performing this process, the signal point including the REPETITION bit is allocated outside the signal constellation, and the error rate during the transmission can be reduced in the multi-level modulation system.

On the other hand, when the above condition is not satisfied, the REPETITION bit generated by the RATE-MATCHING is transmitted without conversion.

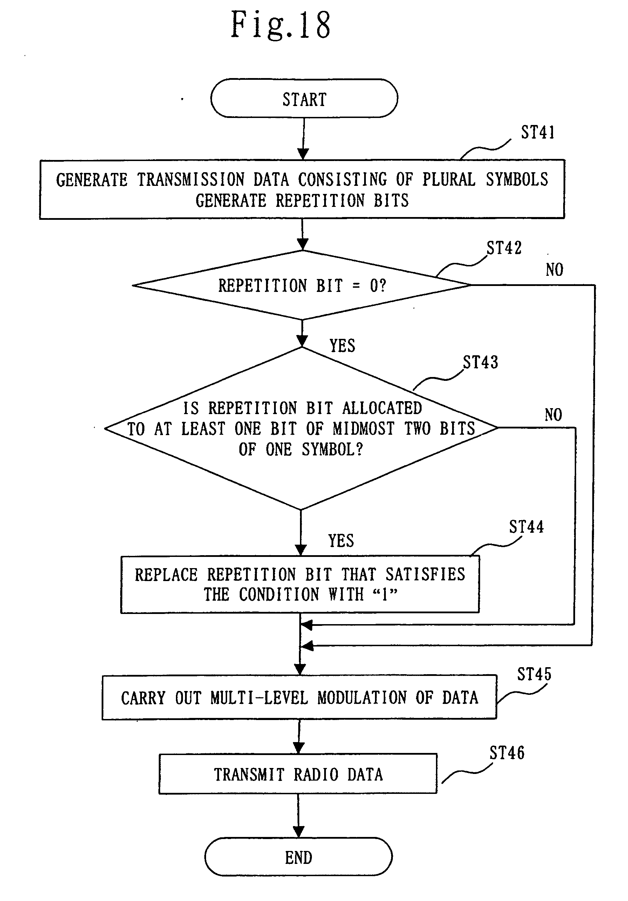

Fig. 18 is a flow diagram from generating plural symbols to transmitting data.

First, the transmission data generating unit 11 of the multi-level modulation apparatus 1 generates a data bit stream consisting of plural symbols (step ST41).

The coding processing unit 12 generates a REPETITION bit by the coding process and the RATE-MATCHING process (step ST41).

When the generated REPETITION bit is '0' and also the REPETITION bit is allocated to at least one of the midmost two bits of the symbol, the coding processing unit 12 replaces the REPETITION bit with "1" (steps ST42, ST43, and ST44). Since the REPETITION bit generated by the coding processing unit 12 is replaced with "1"and transmitted as shown in Fig. 17, it becomes possible to allocate the symbol outside the signal constellation in the IQ coordinate system, and therefore the error rate becomes small.

After the process of the coding processing unit 12 is finished, the modulating unit 13 carries out multi-level modulation of the transmission data after mapping as shown in Fig. 17 (step ST45).

The transmitting unit 14 transmits by radio the transmission data modulated by the modulating unit 13 via the antenna 15 (step ST46).

On the other hand, Fig. 16 is a flow diagram showing processes of receiving and processing data transmitted by the multi-level modulation apparatus also in this embodiment.

When the multi-level modulation apparatus 1 transmits the transmission data, the receiving unit 17 of the multi-level demodulation apparatus 2 receives the transmission data (step ST31).

When the receiving unit 17 receives the transmission data, the demodulating unit 18 demodulates the transmission data (step ST32).

When the demodulating unit 18 demodulates the received data, the decoding processing unit 19 decodes the data (step ST33).

Hereinbefore, the modulation system has been explained, in which in 64 QAM, when the condition that the REPETITION bit generated in order to match the bit number of the radio frame is 0 and also the REPETITION bit is allocated to at least one bit of the midmost two bits of one symbol is satisfied, the REPETITION bit is converted to '1' from '0'.

Since by this embodiment, the symbol of which the REPETITION bit satisfies the above condition can be allocated outside the signal constellation in the IQ coordinate system and transmitted, the error rate of the transmission data can be reduced. Namely, in the present embodiment, in case of 64 QAM in which one symbol has six bits, when the REPETITION bit generated by the RATE-MATCHING process is '0' and the REPETITION bit is allocated to at least one of the midmost two bits of one symbol, as shown in Fig. 18, the REPETITION bit is converted to '1'. The process enables to reduce the error rate of transmission data by multi-level modulation.

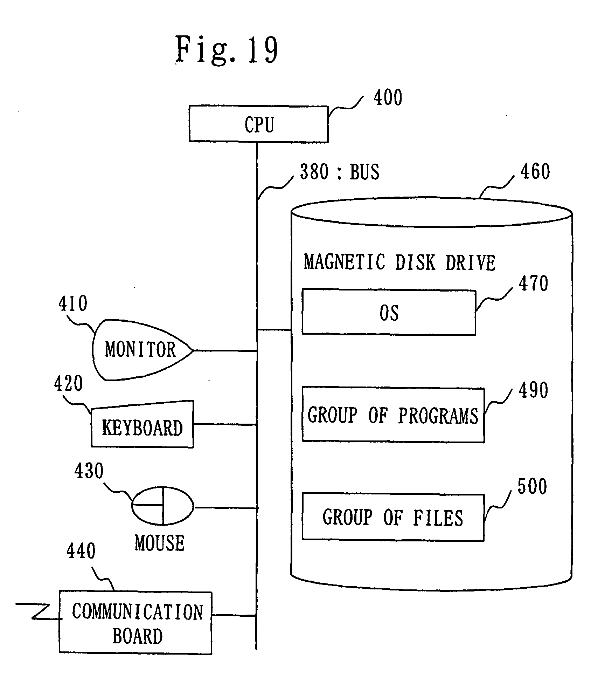

Fig. 19 shows a basic configuration of a computer for the multi-level modulation apparatus 1 and the multi-level demodulation apparatus 2.

In Fig. 19, a CPU (Central Processing Unit) 400 which executes programs is connected to a monitor 410, a key board 420, a mouse 430, a communication board 440, a magnetic disk drive 460, and so on via bus 380.

An operating system (OS) 470, a group of programs 490, a group of files 500 are stored in the magnetic disk drive 460. However, another embodiment can be considered in which the group of programs 490 and the group of files 500 are unified to form a group of object-oriented programs 490.

The group of programs 490 are executed by the CPU 400 and the OS 470.

In each of the foregoing embodiments, the multi-level modulation apparatus 1 and the multi-level demodulation apparatus 2 perform transmission and reception using function of the communication board 440.

In all of the embodiments, each operation of each component relates to each other, and the operation of each component can be replaced by a series of operations, considering the above-described relation between the operations. Then, such replacement creates embodiments for a method.

Further, the operation of each component can be replaced by the process of each component, which creates embodiments for a program.

Yet further, the program can be stored in a computer readable storage medium, which creates embodiments for a computer readable storage medium.

The embodiments for the program and the embodiments for the computer readable storage medium stored in the program can be all constructed by computer executable programs.

Each process of the embodiments for the program and the embodiments for the computer readable storage medium having the program is executed by a program. Such program is stored in a storage unit and read by the central processing unit (CPU) from the storage unit, and the central processing unit performs each flow diagram.

Further, software or a program discussed in each embodiment can be implemented by firmware stored in a ROM (READ ONLY MEMORY). In another way, each function of the above-discussed program can be implemented by a combination of software, firmware, and hardware.

Industrial Applicability

By the above mapping system, the error rate of the transmission data can be reduced.

**Claims**

1. A modulation apparatus for modulating transmission data comprising:

   a transmission data generating unit for generating the transmission data; and
   a coding processing unit for comparing a bit number of the transmission data generated by the transmission data generating unit and a bit number of data area of a transmission frame for transmitting the transmission data, mapping dummy bits to predetermined locations, for the number of bits by which the bit number of transmission data does not achieve the bit number of the data area of the transmission frame, segmenting the transmission data after mapping into a plurality of symbols, each having a prescribed number of bits, and as a result coding the transmission data by mapping the dummy bits to specific bit locations of at least one of the plurality of symbols.

2. The modulation apparatus of claim 1, wherein the coding processing unit maps a plurality of dummy bits to the specific bit locations of at least one of the plurality of symbols by mapping the plurality of dummy bits, each having a value of 1, to the predetermined locations of the transmission data.

3. The modulation apparatus of claim 2, wherein the coding processing unit segments the transmission data into a plurality of symbols, each having N bits ($N \geq 4$), and as a result inserts the plurality of dummy bits to lowest M bits (M = N - 2, $M \geq 2$) of at least one of the plurality of symbols segmented.

4. The modulation apparatus of claim 2, wherein the coding processing unit, as a result of segmenting the transmission data into a plurality of symbols, each having N bits ($N \geq 4$), inserts the plurality of dummy bits to lowest M bits (M = N - 2, $M \geq 2$) of each of final symbols of data, for a number of symbols to which a dummy bit can be inserted.

5. The modulation apparatus of claim 2, wherein the coding processing unit, as a result of segmenting the transmission data into a plurality of symbols, each having N bits ($N \geq 4$), inserts the plurality of dummy bits to lowest M bits (M = N - 2, $M \geq 2$) of a plurality of symbols which are located at a certain interval from an initial symbol segmented.

6. A modulation apparatus which generates a dummy bit having a value of either of 0 and 1 by coding process,

   wherein the modulation apparatus, in case that the dummy bit generated has a value of 0, and in case that transmission data including the dummy bit is segmented into a plurality of symbols composed of four bits and the dummy bit generated is allocated to one of lowest two bits of at least one of the plurality of symbols segmented, converts the value of the dummy bit generated to 1.

7. A modulation apparatus which generates a dummy bit having a value of either of 0 and 1 by coding process,

   wherein the modulation apparatus, in case that the dummy bit generated has a value of 0, and in case that transmission data including the dummy bit is segmented into a plurality of symbols composed of six bits and the dummy bit generated is allocated to at least one of midmost two bits of at least one of the plurality of symbols segmented, converts the value of the dummy bit generated to 1.

8. The modulation apparatus of claim 1, wherein the coding processing unit maps the dummy bits to the predetermined locations of the transmission data generated by the transmission data generating unit, and as a result allocates symbols including dummy bits at particular locations of a signal constellation, in which the plurality of symbols are allocated two-dimensionally according to a rule that each of two symbols include one different bit among the prescribed number of bits is located adjacently.

9. The modulation apparatus of claim 8, wherein the coding processing unit, as a result of mapping the dummy bits to the predetermined locations of the transmission data generated by the transmission data generating unit, allocates the symbols including the dummy bits sequentially from an outside of the signal constellation.

10. A demodulation apparatus for demodulating transmission data received comprising:

   a receiving .unit for receiving the transmission data, to which dummy bits have been inserted to predetermined locations of the transmission data based on a predefined inserting condition and which has been modulated; and
   a decoding processing unit for computing locations of the dummy bits in the transmission data received by the receiving unit from the predefined inserting condition and a bit number of the dummy bits inserted into the transmission data and a bit number of the transmission data, and decoding the transmission data by removing the dummy bits from the transmission data demodulated by the demodulating unit based on the locations of the dummy bits computed.

11. A modulation/demodulation system having a modulation apparatus for modulating transmission data and a demodulation apparatus for receiving and demodulating the transmission data modulated by the modulation apparatus, wherein
the modulation apparatus includes:

a transmission data generating unit for generating the transmission data; and
a coding processing unit for comparing a bit number of the transmission data generated by the transmission data generating unit and a bit number of data area of a transmission frame for transmitting the transmission data, mapping dummy bits to predetermined locations, for the number of bits by which the bit number of transmission data does not achieve the bit number of the data area of the transmission frame, segmenting the transmission data after mapping into a plurality of symbols, each having a prescribed number of bits, and as a result coding the transmission data by mapping the dummy bits to specific bit locations of at least one of the plurality of symbols, and
the demodulation apparatus includes:

a receiving unit for receiving the transmission data, to which the dummy bits have been mapped by the modulation apparatus; and
a decoding processing unit for computing locations of the dummy bits in the transmission data received by the receiving unit from a predefined mapping condition of the dummy bits and a bit number of the dummy bits inserted into the transmission data and a bit number of the transmission data, and decoding the transmission data by removing the dummy bits from the transmission data demodulated by the demodulating unit based on the locations of the dummy bits computed.

12. A modulation method for modulating transmission data comprising:

generating the transmission data;
comparing a bit number of the transmission data generated and a bit number of data area of a transmission frame for transmitting the transmission data, mapping dummy bits to predetermined locations, for the number of bits by which the bit number of transmission data does not achieve the bit number of the data area of the transmission frame, segmenting the transmission data after mapping into a plurality of symbols, each having a prescribed number of bits, and as a result coding the transmission data by mapping the dummy bits to specific bit locations of at least one of the plurality of symbols; and
modulating the transmission data coded.

13. A demodulation method for demodulating transmission data comprising:

receiving the transmission data, to which dummy bits have been inserted to predetermined locations of the transmission data based on a predefined inserting condition and which has been modulated;
computing locations of the dummy bits in the transmission data received by the receiving unit from the predefined inserting condition and a bit number of the dummy bits inserted into the transmission data and a bit number of the transmission data, and decoding the transmission data by removing the dummy bits from the transmission data demodulated by the demodulating unit based on the locations of the dummy bits computed; and
demodulating the transmission data decoded.

14. A modulation program for allowing a computer to perform processes of:

generating the transmission data;
comparing a bit number of the transmission data generated and a bit number of data area of a transmission frame for transmitting the transmission data, mapping dummy bits to predetermined locations, for the number of bits by which the bit number of transmission data does not achieve the bit number of the data area of the transmission frame, segmenting the transmission data after mapping into a plurality of symbols, each having a prescribed number of bits, and as a result coding the transmission data by mapping the dummy bits to specific bit locations of at least one of the plurality of symbols; and
modulating the transmission data coded.

15. A computer readable storage medium having a modulation program therein for allowing a computer to perform processes of:

generating the transmission data;
comparing a bit number of the transmission data generated and a bit number of data area of a transmission frame for transmitting the transmission data, mapping dummy bits to predetermined locations, for the number of bits by which the bit number of transmission data does not achieve the bit number of the data area of the transmission frame, segmenting the transmission data after mapping into a plurality of symbols, each having a prescribed number of bits, and as a result coding the transmission data by mapping the dummy bits to specific bit locations of at least one of the plurality of symbols; and modulating the transmission data coded.

**16.** A demodulation program for allowing a computer to perform processes of:

receiving the transmission data, to which dummy bits have been inserted to predetermined locations of the transmission data based on a predefined inserting condition and which has been modulated;
computing locations of the dummy bits in the transmission data received by the receiving unit from the predefined inserting condition and a bit number of the dummy bits inserted into the transmission data and a bit number of the transmission data, and decoding the transmission data by removing the dummy bits from the transmission data demodulated by the demodulating unit based on the locations of the dummy bits computed; and
demodulating the transmission data decoded.

**17.** A computer readable storage medium having a demodulation program therein for allowing a computer to perform processes of:

receiving the transmission data, to which dummy bits have been inserted to predetermined locations of the transmission data based on a predefined inserting condition and which has been modulated;
computing locations of the dummy bits in the transmission data received by the receiving unit from the predefined inserting condition and a bit number of the dummy bits inserted into the transmission data and a bit number of the transmission data, and decoding the transmission data by removing the dummy bits from the transmission data demodulated by the demodulating unit based on the locations of the dummy bits computed; and
demodulating the transmission data decoded.

Fig.1

I

Q

SIGNAL POINT OF SYMBOL

(0,0,1,1) (0,0,1,0) (0,1,1,0) (0,1,1,1)
(0,0,0,1) (0,0,0,0) (0,1,0,0) (0,1,0,1)
(1,0,0,1) (1,0,0,0) (1,1,0,0) (1,1,0,1)
(1,0,1,1) (1,0,1,0) (1,1,1,0) (1,1,1,1)

DATA BIT STREAM

DATA AREA

TRANSMISSION FRAME

1 SYMBOL  1 SYMBOL  1 SYMBOL  1 SYMBOL

1 0 1 0 1 1 0 1 0 0

EP 1 453 264 A1

# Fig. 2

Q

(1, 0, 1, 1, 1, 1)　(1, 0, 0, 1, 0, 1)　(0, 0, 0, 1, 1, 1)　(0, 0, 1, 0, 1, 1)
　　　　　(1, 0, 1, 1, 0, 1)　　(1, 0, 0, 1, 1, 1)　　(0, 0, 0, 1, 0, 1)　　(0, 0, 1, 1, 1, 1)

(1, 0, 1, 1, 1, 0)　(1, 0, 0, 1, 0, 0)　(0, 0, 0, 1, 1, 0)　(0, 0, 1, 1, 0, 0)
　　　　　(1, 0, 1, 1, 0, 0)　　(1, 0, 0, 1, 1, 0)　　(0, 0, 0, 1, 0, 0)　　(0, 0, 1, 1, 1, 0)

(1, 0, 1, 0, 1, 0)　(1, 0, 0, 0, 1, 0)　(0, 0, 0, 0, 1, 0)　(0, 0, 1, 0, 0, 0)
　　　　　(1, 0, 1, 0, 0, 0)　　(1, 0, 0, 0, 0, 0)　　(0, 0, 0, 0, 0, 0)　　(0, 0, 1, 0, 1, 0)

(1, 0, 1, 0, 1, 1)　(1, 0, 0, 0, 0, 1)　(0, 0, 0, 0, 1, 1)　(0, 0, 1, 0, 0, 1)
　　　　　(1, 0, 1, 0, 0, 1)　　(1, 0, 0, 0, 1, 1)　　(0, 0, 0, 0, 0, 1)　　(0, 0, 1, 0, 1, 1)

I

(1, 1, 1, 0, 1, 1)　(1, 1, 0, 0, 0, 1)　(0, 1, 0, 0, 1, 1)　(0, 1, 1, 0, 0, 1)
　　　　　(1, 1, 1, 0, 0, 1)　　(1, 1, 0, 0, 1, 1)　　(0, 1, 0, 0, 0, 1)　　(0, 1, 1, 0, 1, 1)

(1, 1, 1, 0, 1, 0)　(1, 1, 0, 0, 0, 0)　(0, 1, 0, 0, 1, 0)　(0, 1, 1, 0, 0, 0)
　　　　　(1, 1, 1, 0, 0, 0)　　(1, 1, 0, 0, 1, 0)　　(0, 1, 0, 0, 0, 0)　　(0, 1, 1, 0, 1, 0)

(1, 1, 1, 1, 1, 0)　(1, 1, 0, 1, 0, 0)　(0, 1, 0, 1, 1, 0)　(0, 1, 1, 1, 0, 0)
　　　　　(1, 1, 1, 1, 0, 0)　　(1, 1, 0, 1, 1, 0)　　(0, 1, 0, 1, 0, 0)　　(0, 1, 1, 1, 1, 0)

(1, 1, 1, 1, 1, 1)　(1, 1, 0, 1, 0, 1)　(0, 1, 0, 1, 1, 1)　(0, 1, 1, 1, 0, 1)
　　　　　(1, 1, 1, 1, 0, 1)　　(1, 1, 0, 1, 1, 1)　　(0, 1, 0, 1, 0, 1)　　(0, 1, 1, 1, 1, 1)

SIGNAL POINT OF SYMBOL

1 SYMBOL　　1 SYMBOL

| 1 | 0 | 1 | 1 | 0 | 0 | 0 | 1 | 0 | 0 | ······ | 0 |

DATA BIT STREAM

12

# Fig. 3

1

```
TRANSMISSION DATA
GENERATING UNIT          11

        ↓

CODING PROCESSING UNIT   12

        ↓

MODULATING UNIT          13

        ↓                         15

TRANSMITTING UNIT (RF)   14       ▽
```

MULTI-LEVEL MODULATION APPARATUS

# Fig. 4

2

```
DECODING PROCESSING UNIT    19

        ↑

DEMODULATING UNIT           18

        ↑                          16

RECEIVING UNIT (RF)         17     ▽
```

MULTI-LEVEL DEMODULATION APPARATUS

# Fig. 5

```
        ┌──────────────┐
        │    START     │
        └──────┬───────┘
               │                              ST1
        ┌──────▼────────────────┐
        │ GENERATE TRANSMISSION DATA
        │ CONSISING OF PLURAL SYMBOLS │
        └──────┬────────────────┘
               │                              ST2
               ▼                                    NO
         ◇ REPETITION BITS ◇ ──────────────────┐
           GENERATED?                           │
               │ YES              ST3           │
        ┌──────▼────────────────┐               │
        │ REPLACE REPETITION BITS WITH "1"      │
        │       AND MAP "1"     │               │
        └──────┬────────────────┘               │
               │◄───────────────────────────────┘
               │                              ST4
        ┌──────▼────────────────┐
        │ CARRY OUT MULTI-LEVEL MODULATION OF
        │      TRANSMISSION DATA │
        └──────┬────────────────┘
               │                              ST5
        ┌──────▼────────────────┐
        │   TRANSMIT RADIO DATA  │
        └──────┬────────────────┘
               │
        ┌──────▼───────┐
        │     END      │
        └──────────────┘
```

# Fig. 6

```
                    ┌─────────────────┐
                    │      START      │
                    └─────────────────┘
                             │
                             ▼
          ┌──────────────────────────────────────┐   ST11
          │           TRANSMIT DATA               │
          └──────────────────────────────────────┘
                             │
                             ▼
          ┌──────────────────────────────────────┐   ST12
          │  CARRY OUT MULTI-LEVEL DEMODULATION   │
          │               OF DATA                 │
          └──────────────────────────────────────┘
                             │
                             ▼
                ╱──────────────────────╲            ST13        NO
               ╱   REPETITION BITS       ╲──────────────────────┐
               ╲        EXIST?           ╱                       │
                ╲──────────────────────╱                        │
                             │  YES                              │
                             ▼                                   │
          ┌──────────────────────────────────────┐   ST14       │
          │        REMOVE REPETITION BITS         │              │
          └──────────────────────────────────────┘              │
                             │◄──────────────────────────────────┘
                             ▼
          ┌──────────────────────────────────────┐   ST15
          │           CHANNEL DECODING            │
          └──────────────────────────────────────┘
                             │
                             ▼
                    ┌─────────────────┐
                    │       END       │
                    └─────────────────┘
```

# Fig. 7

```
                    │
                    ▼
        ┌───────────────────────────┐ ～ P1
        │        ATTACH CRC         │
        └───────────────────────────┘
                    │
                    ▼
        ┌───────────────────────────┐ ～ P2
        │  SEGMENT TRANSMISSION DATA │
        │        (CODE BLOCK)        │
        └───────────────────────────┘
                    │
                    ▼
        ┌───────────────────────────┐ ～ P3
        │   CODE TRANSMISSION DATA   │
        └───────────────────────────┘
                    │
                    ▼
              ◇──────────────◇ ～ P4
             ╱ REPETITION BITS ╲        YES
            ◇   GENERATED?      ◇──────────┐
             ╲                 ╱           │
              ◇──────────────◇             │
                    │ NO                    │
                    ▼                       │
┌─────────────────────────────────────┐ ～ P5    ┌──────────────────────┐ ～ P10
│ SEGMENT TRANSMISSION DATA BASED ON   │          │ EXTRACT REPETITION   │
│           NO. OF PhCH                │          │        BITS          │
└─────────────────────────────────────┘          └──────────────────────┘
          │             │                                    │
          ▼             ▼ ～ P6                               │
        ┌───────────────────────────┐                        │
        │    HS-DSCH INTERLEAVING    │                        │
        └───────────────────────────┘                        │
          │             │ ～ P7                               │
          ▼             ▼                                     │
        ┌───────────────────────────┐◄──────────────────────┘
        │   REPETITION BIT MAPPING   │
        └───────────────────────────┘
          │             │
          ▼             ▼ ～ P8
        ┌───────────────────────────┐
        │        PhCH MAPPING        │
        └───────────────────────────┘
          │             │
          ▼             ▼ ～ P9
        ┌───────────────────────────┐
        │ BIT REARRANGEMENT (16 QAM) │
        └───────────────────────────┘
          │             │
          ▼             ▼
       PhCH#1         PhCH#2
```

# Fig. 8

N BITS

TRANSMISSION DATA
(INFORMATION BIT)

REPETITION BITS

MAPPING PROCESS OF
REPETITION BITS

N/2 SYMBOL

1 SYMBOL

. . . . .

REPETITION BIT

# Fig. 9

EXAMPLE OF DATA BIT
AFTER INTERLEAVING PROCESS

| 1 | 1 | 1 | . . . . | 1 | 1 | 0 | 1 | 0 | 1 | 1 | 0 |

DATA BIT

REPETITION BIT

MAPPING PROCESS OF
REPETITION BITS

| 1 | 1 | . . | 1 | 1 | 0 | 1 | 1 | 1 | 1 | 0 | 1 | 1 |

. . .

1 SYMBOL      1 SYMBOL

# Fig.10

N BITS

TRANSMISSION DATA
(INFORMATION BIT)

REPETITION BITS

MAPPING PROCESS OF
REPETITION BITS

N/4 SYMBOL

1 SYMBOL

....

REPETITION BIT

# Fig.11

EXAMPLE OF DATA BIT
AFTER INTERLEAVING PROCESS

| 1 | 1 | 1 | .... | 1 | 1 | 0 | 1 | 0 | 1 | 1 | 0 |

DATA BIT

REPETITION BIT

MAPPING PROCESS OF
REPETITION BITS

| 1 | 1 | .. | 1 | 1 | 1 | 1 | 1 | 0 | 1 | 1 | 1 | 1 |

...

1 SYMBOL

# Fig.12

N BITS

AFTER HS-DSCH
INTERLEAVING PROCESS

TRANSMISSION DATA
(INFORMATION BIT)

REPETITION BITS

MAP UNIFORMLY TO
TRANSMISSION DATA

AFTER MAPPING PROCESS OF
REPETITION BITS

REPETITION BIT

# Fig.13

```
                    │
                    ▼
┌─────────────────────────────────┐
│          ATTACH CRC             │──── P11
└─────────────────────────────────┘
                    │
                    ▼
┌─────────────────────────────────┐
│    SEGMENT TRANSMISSION DATA     │──── P12
│        (CODE BLOCK)             │
└─────────────────────────────────┘
                    │
                    ▼
┌─────────────────────────────────┐
│      CODE TRANSMISSION DATA      │──── P13
└─────────────────────────────────┘
                    │
                    ▼
┌─────────────────────────────────┐
│     GENERATE REPETITION BITS     │──── P14
└─────────────────────────────────┘
                    │
                    ▼
┌─────────────────────────────────────────────┐
│ SEGMENT TRANSMISSION DATA BASED ON NO. OF PhCH │──── P15
└─────────────────────────────────────────────┘
              │           │
              ▼           ▼
┌─────────────────────────────────┐
│      HS-DSCH INTERLEAVING        │──── P16
└─────────────────────────────────┘
              │           │
              ▼           ▼
┌─────────────────────────────────┐
│     CONVERT REPETITION BITS      │──── P17
└─────────────────────────────────┘
              │           │
              ▼           ▼
┌─────────────────────────────────┐
│         PhCH MAPPING             │──── P18
└─────────────────────────────────┘
              │           │
              ▼           ▼
┌─────────────────────────────────┐
│   BIT REARRANGEMENT (16 QAM)     │──── P19
└─────────────────────────────────┘
              │           │
              ▼           ▼
          PhCH#1      PhCH#2
```

# Fig.14

1 SYMBOL | 1 SYMBOL | 1 SYMBOL

| 1 | 0 | 0 | 0 | 1 | 1 | 0 | 1 | 0 | 0 | ---·---- | 0 |

REPETITION BIT   REPETITION BIT

DATA BIT STREAM

REPLACEMENT OF
REPETITION BIT

1 SYMBOL | 1 SYMBOL | 1 SYMBOL

| 1 | 0 | 0 | 1 | 1 | 1 | 1 | 1 | 0 | 0 | ---·---- | 0 |

REPETITION BIT   REPETITION BIT

DATA BIT STREAM

Q

(1,0,1,1)  (1,0,0,1)  (0,0,0,1)  (0,0,1,1)

(1,0,1,0)  (1,0,0,0)  (0,0,0,0)  (0,0,1,0)

I

(1,1,1,0)  (1,1,0,0)  (0,1,0,0)  (0,1,1,0)

(1,1,1,1)  (1,1,0,1)  (0,1,0,1)  (0,1,1,1)

SIGNAL POINT OF SYMBOL

EP 1 453 264 A1

# Fig.15

```
                    ┌──────────────┐
                    │    START     │
                    └──────┬───────┘
                           │                          ST21
           ┌───────────────▼─────────────────────────┐
           │ GENERATE TRANSMISSION DATA CONSISTING    │
           │ OF PLURAL SYMBOLS                        │
           │ GENERATE REPETITION BITS                 │
           └───────────────┬─────────────────────────┘
                           │                          ST22
                           ▼                                      NO
                  ◇ REPETITION BIT = 0? ◇ ─────────────────────────┐
                           │                                       │
                          YES                                      │
                           │                     ST23              │
                  ◇ IS REPETITION BIT ALLOCATED ◇        NO        │
                  ◇ TO AT LEAST ONE BIT OF LOWER ◇ ───────────────┤
                  ◇ TWO BITS OF ONE SYMBOL?      ◇                 │
                           │                                       │
                          YES                  ST24                │
           ┌───────────────▼─────────────────────────┐            │
           │ REPLACE REPETITION BIT THAT SATISFIES    │            │
           │ THE CONDITION WITH "1"                   │            │
           └───────────────┬─────────────────────────┘            │
                           ◄──────────────────────────────────────┘
                           │                          ST25
           ┌───────────────▼─────────────────────────┐
           │ CARRY OUT MULTI-LEVEL MODULATION         │
           │ OF TRANSMISSION DATA                     │
           └───────────────┬─────────────────────────┘
                           │                          ST26
           ┌───────────────▼─────────────────────────┐
           │ TRANSMIT RADIO DATA                      │
           └───────────────┬─────────────────────────┘
                           │
                    ┌──────▼───────┐
                    │     END      │
                    └──────────────┘
```

# Fig.16

```
          ┌─────────────────┐
          │      START       │
          └─────────────────┘
                   │
                   ▼
┌──────────────────────────────────────┐   ST31
│      RECEIVE TRANSMISSION DATA        │
└──────────────────────────────────────┘
                   │
                   ▼
┌──────────────────────────────────────┐   ST32
│   CARRY OUT MULTI-LEVEL MODULATION    │
│        OF TRANSMISSION DATA           │
└──────────────────────────────────────┘
                   │
                   ▼
┌──────────────────────────────────────┐   ST33
│          CHANNEL DECODING             │
└──────────────────────────────────────┘
                   │
                   ▼
          ┌─────────────────┐
          │       END        │
          └─────────────────┘
```

# Fig.17

SIGNAL POINT OF SYMBOL

EP 1 453 264 A1

# Fig.18

START

↓

GENERATE TRANSMISSION DATA CONSISTING OF PLURAL SYMBOLS
GENERATE REPETITION BITS ⟍ ST41

↓

REPETITION BIT = 0? ⟍ ST42 —— NO ———┐

↓ YES                                  │

IS REPETITION BIT ALLOCATED
TO AT LEAST ONE BIT OF MIDMOST TWO BITS
OF ONE SYMBOL? ⟍ ST43 —— NO ——┐       │

↓ YES                          │       │

REPLACE REPETITION BIT THAT SATISFIES
THE CONDITION WITH "1" ⟍ ST44          │       │

↓ ←────────────────────────────────────┘←──────┘

CARRY OUT MULTI-LEVEL MODULATION OF DATA ⟍ ST45

↓

TRANSMIT RADIO DATA ⟍ ST46

↓

END

# Fig.19

CPU — 400

380 : BUS

460

MAGNETIC DISK DRIVE

410
MONITOR

OS — 470

420
KEYBOARD

GROUP OF PROGRAMS — 490

430
MOUSE

GROUP OF FILES — 500

440
COMMUNICATION BOARD

EP 1 453 264 A1

## INTERNATIONAL SEARCH REPORT

| International application No. |
|---|
| PCT/JP03/07964 |

**A. CLASSIFICATION OF SUBJECT MATTER**
Int.Cl⁷ H04L27/00

According to International Patent Classification (IPC) or to both national classification and IPC

**B. FIELDS SEARCHED**

Minimum documentation searched (classification system followed by classification symbols)
Int.Cl⁷ H04L27/00

Documentation searched other than minimum documentation to the extent that such documents are included in the fields searched

| Jitsuyo Shinan Koho | 1926–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 07-273812 A (AT & T Corp.),<br>20 October, 1995 (20.10.95),<br>Page 5, left column, lines 18 to 40; right<br>column, lines 17 to 35; Figs. 2, 5 to 7<br>& TW 249873 A      & EP 0674413 A2<br>& EP 0674413 A3      & US 5901135 A<br>& KR 338911 B | 1,12,14,15<br>8<br>2-7,9-11,13,<br>16,17 |
| X<br>Y<br>A | JP 06-030071 A (American Telephone and Telegraph<br>Co.),<br>04 February, 1994 (04.02.94),<br>Page 3, left column, lines 26 to 31; right column,<br>lines 28 to 35; page 4, right column, lines 14 to<br>44; page 5, right column, lines 28 to 30;<br>Figs. 2 to 4<br>& EP 0553995 A1      & US 5331670 A | 1,12,14,15<br>8<br>2-7,9-11,13,<br>16,17 |

☒ Further documents are listed in the continuation of Box C.  ☐ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 July, 2003 (18.07.03) | 29 July, 2003 (29.07.03) |

| Name and mailing address of the ISA/<br>Japanese Patent Office | Authorized officer |
|---|---|
| Facsimile No. | Telephone No. |

Form PCT/ISA/210 (second sheet) (July 1998)

## INTERNATIONAL SEARCH REPORT

| | International application No. |
|---|---|
| | PCT/JP03/07964 |

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 08-079325 A (Hitachi, Ltd.), 22 March, 1996 (22.03.96), Page 4, left column, lines 32 to 42; right column, lines 5 to 9; Figs. 8, 10 (Family: none) | 8 |
| E,X | JP 2003-037644 A (Mitsubishi Electric Corp.), 07 February, 2003 (07.02.03), Page 6, right column, lines 20 to 31; page 7, left column, lines 2 to 11; page 12, right column, line 35 to page 13, left column, line 45; page 13, right column, line 23 to page 14, left column, line 50; Figs. 4, 5, 14, 16 (Family: none) | 1,8,12,14,15 |

Form PCT/ISA/210 (continuation of second sheet) (July 1998)